# EUROPÄISCHE PATENTANMELDUNG

(11) **EP 1 522 613 A1**
(43) Veröffentlichungstag der Anmeldung: **13.04.2005**
(21) Anmeldenummer: 03022374.7
(22) Anmeldetag: 06.10.2003
(51) Int. Cl.: D01H 5/30, D01G 1/08

(54) **Einrichtung zur Herstellung von Kunstfaser-Stapelgarn**

(71) Anmelder: Schärer Schweiter Mettler AG, 8812 Horgen (CH)
(72) Erfinder: Thery, David, 8810 Horgen (DE)
(74) Vertreter: Dittrich, Horst, Dr.

(57) **Zusammenfassung**

Eine Einrichtung zur Herstellung von Stapelgarn aus Filamentfäden (1), umfasst Mittel (5-8) zur Reisskonvertierung der Filamentfäden zu Stapelfasern, Mittel (9) für die Verfestigung der Stapelfasern zu einem Stapelgarn (G) und Mittel zum Aufspulen des Stapelgarns (G). Die Einrichtung ist als individuelle Maschinenposition (M) einer mehrerer Maschinenpositionen umfassenden Einheit ausgebildet, und jede Maschinenposition (M) ist individuell mit Filamentfäden (1) beschickbar und weist einen individuellen Antrieb auf. Jede Maschinenposition (M) weist mindestens zwei Streckbrechungszonen (SB1, SB2, SB3) und eine optionale Streckzone (SZ) auf, welche durch antreibbare Walzen (5, 6, 7, 8; 2, 3) gebildet sind, und jede dieser Walzen weist einen individuellen, von einem Umrichter gespeisten Antriebsmotor auf.

## Beschreibung

Die Erfindung liegt auf dem Gebiet der Herstellung von Stapelgam aus Filamentfäden, wobei es sich um reines Kunstfaser-Stapelgam oder um ein Mischgarn aus Kunst- und Naturfasern handeln kann.

Die Entwicklung in der Stapelfaserspinnerei ist durch die Vorstellung gekennzeichnet, dass sowohl Naturfasern wie Baumwolle und Wolle, als auch Kunstfasern mit der gleichen Technologie verarbeitet werden können. Diese Vorstellung bildet die Basis für die Herstellung von Mischgarnen zusätzlich zu den Stapelgamen aus 100 Prozent Kunst- oder Naturfasern.

Für die Herstellung von Mischgarn ist erforderlich, dass die dazu verwendeten Kunstfasern hinsichtlich Verteilung der Faserlänge, Kraft-/Dehnungsverhältnis, Feinheit und Kräuselung möglichst eng an die natürlich vorgegebenen Eigenschaften der Naturfasern angepasst werden können. Die genannten Faktoren bestimmen ausserdem wichtige Herstellungsparameter und Garneigenschaften, wie Unregelmässigkeit des Garns, Anzahl der Fasern im Garnquerschnitt und Garnnummer.

Bis heute ist Baumwolle die weltweit am meisten verarbeitete Faser. Kunstfasern bilden eher Komponenten für Mischungen mit Naturfasern und Stapelfasergame dienen hauptsächlich zur Erzielung aussergewöhnlicher ästhetischer Effekte, wobei durch geschickte Mischungen auch eine spezielle Funktionalität erreicht werden kann.

Seit einiger Zeit versucht man den Verarbeitungsprozess von Kunstfasern zu verkürzen. Um den Umweg über die Kardierung zur Faserorientierung und Parallelisierung zu umgehen, werden bei einem ersten Vorschlag zur Verkürzung des Verarbeitungsprozesses die Filamente teilweise über Schneiden oder Reissen auf geeignete Faserlängen gekürzt, welche danach direkt ein Faserband bilden. Anschliessend erfolgt ein Verspinnen nach den konventionellen Verfahren über Strecken, Vorgarnherstellung und Verfestigung mit Echtdrehung. Dabei stellt die eigentliche Garnerzeugung und Verfestigung mit Echtdrehung die kostenintensivste Passage des Gesamtprozesses dar. Dies führte zu der bekannten Entwicklung der nichtkonventionellen Spinnverfahren wie Rotor-, Friktions- und Air-Jet-Spinnen, die äusserst produktiv sind und eine Prozessverkürzung zur Folge haben, indem aus Band eine direkt weiter verarbeitbare Spule erzeugt wird, bei der die Garnqualität zu 100% geprüft ist.

Bei einem zweiten Vorschlag zur Verkürzung des Verarbeitungsprozesses von Kunstfasem werden die Filamentgame in einer Streckbrechungsmaschine gerissen, wobei die Streckbrechungsmaschine mit LOY, POY oder FOY-Filamentgamen gespeist wird und das Ergebnis der Streckbrechung durch ein Roving gebildet ist. Dieses wird dann in einem Ringspinnprozess gesponnen, aufgespult und zu einem Garn verfestigt. Dieses Verfahren bringt zwar eine wesentliche Verkürzung des Herstellungsprozesses, es ist aber nicht sehr flexibel, weil wegen der hohen Verarbeitungskapazität die Kosten für die betreffende Einrichtung sehr hoch sind und kleinere Chargen nicht wirtschaftlich hergestellt werden können. Das Ausgangsprodukt für die Beschickung der Streckbrechungsmaschine ist eine aus einer Vielzahl von Filamenten bestehende Lunte (Tow) mit einer Nummer von bis zu 500'000 Tex. Die Streckbrechungsmaschine ist auf diese Nummer ausgelegt und daher für kleinere Chargen überdimensioniert und daher zu teuer.

Die vorliegende Erfindung betrifft eine Einrichtung zur Herstellung von Stapelgam aus Filamentfäden, mit Mitteln zur Reisskonvertierung der Filamentfäden zu Stapelfasern, Mitteln für die Verfestigung der Stapelfasern zu einem Stapelgam und Mitteln zum Aufspulen des Stapelgarns.

Durch die Erfindung soll eine Einrichtung für die Herstellung von Stapelgam aus Filamentfäden geschaffen werden, die den Verarbeitungsprozess von Kunstfasen verkürzt, die zur kostengünstigen Herstellung kleinerer Chargen geeignet ist, und die insbesondere keine teure Lunte als Ausgangsprodukt erfordert.

Diese Aufgabe wird erfindungsgemäss dadurch gelöst, dass die Einrichtung als individuelle Maschinenposition einer mehrere Maschinenpositionen umfassenden Einheit ausgebildet ist, und dass jede Maschinenposition individuell mit Filamentfäden beschickbar ist und einen individuellen Antrieb aufweist.

Die erfindungsgemässe Einrichtung für die Herstellung von Stapelgarn ist eine Maschine mit autonomen Maschinenpositionen, von denen jede individuell beschickbar und individuell antreibbar ist. Das hat den Vorteil maximaler Flexibilität, weil praktisch auf jeder Maschinenposition ein Stapelgam mit unterschiedlichen Eigenschaften hergestellt werden kann.

Eine erste bevorzugte Ausführungsform der erfindungsgemässen Einrichtung ist dadurch gekennzeichnet, dass jede Maschinenposition mindestens zwei Streckbrechungszonen und eine optionale Streckzone aufweist, welche durch antreibbare Walzen gebildet sind, und dass jede dieser Walzen einen individuelle, von einem Umrichter gespeisten Antriebsmotor aufweist.

Eine zweite bevorzugte Ausführungsform der erfindungsgemässen Einrichtung ist dadurch gekennzeichnet, dass eine Zusammenführung der zugeführten Filamentfäden zu einem Filamentgarn erfolgt, welches die mindestens zwei Streckbrechungszonen und eine die Mittel zur Verfestigung des die Streckbrechung gebildeten Faserbandes bildende Luftdüse durchläuft, und dass der Luftdüse eine Streckwalze für die Erzeugung der für die Verfestigung des Faserbandes zum Stapelgarn erforderlichen Verfestigungsspannung zugeordnet ist.

Eine dritte bevorzugte Ausführungsform der erfindungsgemässen Einrichtung ist dadurch gekennzeichnet, dass die die optionale Streckzone bildenden Walzen durch beheizte Galetten gebildet sind, und dass zwischen der optionalen Streckzone und der ersten Streckbrechungszone eine Kühlzone mit einer Kühleinrichtung vorgesehen ist.

Eine vierte bevorzugte Ausführungsform der erfindungsgemässen Einrichtung ist dadurch gekennzeichnet, dass die Walzen der Streckzone und/oder die Streckwalze durch vom Filamentgarn oder vom Stapelgam mehrfach umschlungene, aus einer Förderwalze und einer Beilaufwalze bestehende Rollenpaare gebildet sind.

Eine fünfte bevorzugte Ausführungsform der erfindungsgemässen Einrichtung ist dadurch gekennzeichnet, dass die Mittel zum Aufspulen des Stapelgams durch eine Fadenverlegung gebildet sind, welche einen in Längsrichtung der Spule eine Changierbewegung ausführenden und von einem Changierelement antreibbaren Fadenführer aufweist.

Eine sechste bevorzugte Ausführungsform der erfindungsgemässen Einrichtung ist gekennzeichnet durch ein allen Maschinenpositionen zugeordnetes, gemeinsames Terminal von welchem die Einstellparameter auf die einzelnen Maschinenpositionen herunter ladbar sind.

Weitere vorteilhafte Ausführungsformen und Entwicklungen der erfindungsgemässen Einrichtung sind in den Ansprüchen 3, 4, 6, 10 und 12 bis 19 beansprucht.

Im Folgenden wird die Erfindung anhand von Ausführungsbeispielen und der Zeichnungen näher erläutert; es zeigt:
- Fig. 1: eine schematische Darstellung eines Ausschnitts aus einer erfindungsgemässen Einrichtung zur Herstellung von Stapelgarn aus Filamentfäden; und
- Fig. 2: eine Detailvariante der Einrichtung von Fig. 1.

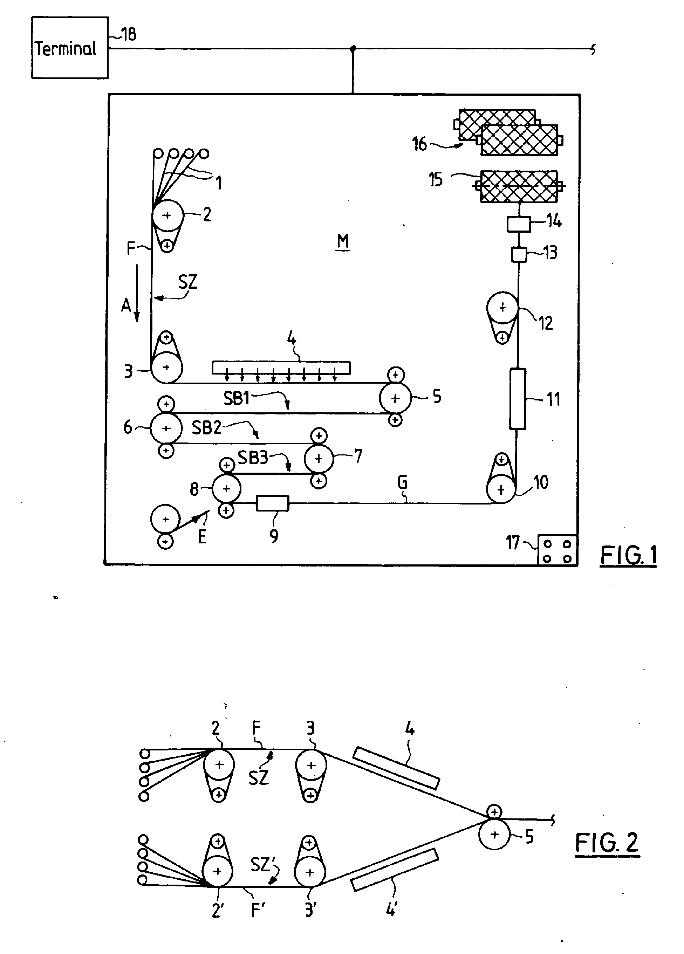

Figur 1 zeigt eine individuelle Maschinenposition M einer aus einer Mehrzahl solcher Maschinenpositionen M bestehenden Einrichtung zur Herstellung von Stapelgam aus Filamentfäden. Darstellungsgemäss wird eine Anzahl von maximal etwa 20, vorzugsweise 1 bis 8, Filamentfäden 1 von einem Gatter abgezogen, wobei die Spannung der Filamentfäden 1 überwacht und auf einen konstanten Wert geregelt wird. Die Filamentfäden 1 werden zu einem Filamentgarn F zusammengeführt, und dieses gelangt in eine durch zwei Förderwalzen 2 und 3 gebildete Streckzone SZ, welche zur Orientierung der Fasern erforderlich ist. Wenn das Endprodukt, also das Stapelgam, eine teilweise Orientierung der Fasern aufweisen soll (POY = partially oriented yarn), ist eine teilweise Streckung des Filamentgams erforderlich, und wenn das Endprodukt eine vollständige Orientierung der Fasern aufweisen soll (LOY = low oriented yarn), ist eine vollständige Streckung des Filamentgams F erforderlich. Dagegen erfordert ein Endprodukt mit einer geringen Orientierung der Fasern (FOY = fully oriented yarn)keine Streckung. Die Walze 2 leitet den Streckprozess ein und optimiert die Streckkräfte und die Walze 3 bewirkt über ihre verglichen mit der Walze 2 höhere Umfangsgeschwindigkeit den Streckprozess. Die Walzen 2 und 3 sind vorzugsweise beheizt, wodurch eine Fixierung des Filamentgams F erreicht wird, was eine wesentliche Voraussetzung für Hochgeschwindigkeits-Spinnen darstellt.

Anschliessend gelangt das Filamentgarn F in eine eine Kühleinrichtung 4 aufweisende Kühlzone, in der es von der Temperatur der beheizten Walzen 2 und 3 auf Umgebungstemperatur abgekühlt wird. Nach der Kühlzone durchläuft das Filamentgarn F mindestens drei, darstellungsgemäss vier, beabstandete Walzen 5,6, 7 und 8, die je aus einer Förderwalze und zwei Anpresswalzen bestehen, wobei die letzteren aus Gummi bestehen und zur Vermeidung von Schlupf des Filamentgams dienen. Die Walzen 5-8 bilden drei Streckbrechungszonen SB1 bis SB3, von denen die letzte optional ist. Die in der mit einem Pfeil A bezeichneten Garnlaufrichtung vorderste Walze 8 ist mit einer höheren Geschwindigkeit angetrieben als die Walze 7, diese mit einer höheren Geschwindigkeit als die Walze 6 und diese mit einer höheren Geschwindigkeit als die Walze 5, wodurch auf das Filamentgarn in jeder Streckbrechungszone SB1 bis SB3 eine Zugkraft ausgeübt wird. Die Länge der ersten Streckbrechungszone SB1 ist grösser als die Länge der zweiten Streckbrechungszone SB2 und deren Länge ist grösser als diejenige der dritten Streckbrechungszone SB3. In der ersten Streckbrechungszone SB1 werden alle Filamente des Filamentgams F gebrochen und dadurch in Fasern umgewandelt, in der zweiten Streckbrechungszone SB2 wird durch eine neuerliche, teilweise Brechung der nunmehrigen Fasern die Verteilung der Faserlänge bestimmt und die Anzahl der Fasern im Garnquerschnitt reduziert, und in der optionalen dritten Streckbrechungszone SB3 wird eine Reduktion der Schwankungsbreite der Faserlängen erreicht. Die Bestimmung der Verteilung der Faserlänge in der zweiten Streckbrechungszone SB2 bedeutet eine Reduktion der Garnnummer auf den gewünschten dtex-Wert (dtex = Decitex, das ist das Gewicht in Gramm pro 10'000 Meter Garn). Siehe zu den eben beschriebenen Verfahrensschritten auch die WO-A-00/77283, in welcher der Streckbrech-prozess ausführlich beschrieben ist. Im Englischen wird die zweite oder dritte Streckbrechung (Streckbrechungszone SB2 beziehungsweise SB3) oft auch als "Rebreaking" bezeichnet.

Durch den Streckbrechprozess in den Streckbrechungszonen SB1 bis SB3 werden die Filamente des Filamentgams F in ein aus relativ losen Fasern bestehendes Faserband umgewandelt, welches im Anschluss an die in Fadenlaufrichtung A vordere Walze 8 der dritten Streckbrechungszone SB3 zu einem zusammen haltenden Stapelgam verfestigt (konsolidiert) wird. Durch diese Verfestigung, die durch eine Lüftdüse 9 erfolgt, erhält man ein Stapelgam G mit den gewünschten optischen und physikalischen Eigenschaften und dem gewünschten Griff. Die für die Verfestigung des Faserbandes zum Stapelgam G erforderliche Verfestigungsspannung wird durch eine Streckwalze 10 erzeugt.

Die Streckwalze 10, die durch ein aus einer Förderwalze und einer Beilaufwalze bestehendes und vom Stapelgarn mehrfach umschlungenes Rollenpaar gebildet ist, kann beheizt sein, um das Stapelgarn G zu fixieren und eventuelle Probleme bei der Färbung zu vermeiden. Darstellungsgemäss ist nach der Streckwalze 10 ein Heizelement 11 und nach diesem eine Förderwalze 12 vorgesehen, wobei die Förderwalze 12 immer ungeheizt ist. Mit der Förderwalze 12 wird die Fixierspannung kontrolliert. Es sind folgende Anordnungen von Streckwalze 10, Heizelement 11 und Förderwalze 12 möglich: Geheizte Streckwalze 10 plus Förderwalze 12, kein Heizelement; nicht geheizte Streckwalze 10 plus Heizelement (Rohrheizer) 11 plus Förderwalze 12; geheizte Streckwalze 10 plus Heizelement 11 plus Förderwalze 12, wenn die Schrumpfung drastisch reduziert werden soll. Die Temperatur der beheizten Streckwalze 10 und/oder des Heizelements 11 beträgt etwa 200 bis 230° C. Im Anschluss an die Förderwalze 12 durchläuft das Stapelgarn G eine Testvorrichtung 13, durch welche anhand verschiedener Parameter die Qualität des Stapelgams G kontinuierlich in Echtzeit überprüft wird.

Im Anschluss an die Testvorrichtung 13 gelangt das Stapelgam zu einer Avivagevorrichtung14 (optional) zur Verbesserung des Verhaltens des Stapelgams G (beispielsweise Verminderung von Reibung und elektrostatischer Aufladung) bei der Weiterverarbeitung. In der Avivagevorrichtung 14 wird das Stapelgam G beispielsweise mit einer Emulsion von Pflanzen- und Mineralölen behandelt. Nach der Avivagevorrichtung 14 gelangt das Stapelgam zu einer Spuleinrichtung, wo Garnspulen 15 erzeugt werden, die beispielsweise als Endprodukt an Weiterverarbeiter verkauft, oder als Färbespulen oder für beliebige andere Verarbeitungsprozesse verwendet werden können. Geeignete Spuleinrichtungen sind beispielsweise in der EP-A-453 622 und in der EP-A-0 829 444 beschrieben. Als weitere Option kann die Maschinenposition M einen Autodoffer 16 zur automatischen Abnahme der Spulen 15 aufweisen.

Jede der verschiedenen Walzen ist von einem individuellen elektronischen Motor angetrieben und jeder Motor ist durch einen Umrichter gespeist (Motoren und Umrichter sind nicht eingezeichnet). Jede Maschinenposition M weist ausserdem ein Interface 17 für die Bedienung der Maschinenstatione (start/stopp) auf. Jeweils mehrere Maschinenpositionen M sind in einem gemeinsamen Rahmen zu einer Sektion zusammengefasst, die Spinnmaschine umfasst bis zu 48 Maschinenpositionen und mehr. Pro Spinnmaschine ist ein Terminal 18 vorgesehen, in welches die Parameter für die einzelnen Maschinenstationen M eingebbar und auf diese herunter ladbar sind.

Mit der beschriebenen Spinnmaschine können auch Mikrofasern hergestellt werden, nach denen wegen der Weichheit und des Griffs der daraus hergestellten Stoffe, eine starke Nachfrage besteht. Während Mikrofasern mit konventionellen Stapelgarnverfahren nur schwierig herzustellen sind, können mit der beschriebenen Spinnmaschine PES, PA und PP Mikrofasern ökonomisch und in exzellenter Qualität hergestellt werden. Ebenso können auch Zweikomponentengarne wirtschaftlich hergestellt werden.

Für die Herstellung eines aus zwei Filamentgamen F und F' bestehenden Zweikomponentengarns werden gemäss Fig. 3 zwei Streckzonen SZ und SZ' vorgesehen. In der oberen Streckzone SZ1 wird beispielsweise ein PES POY Filamentgarn F um 70% gestreckt und in der unteren Streckzone SZ' ein PA POY Filamentgarn F' um 30%. Im Anschluss an die beiden Streckzonen SZ1 und SZ2 durchlaufen die beiden Filamentgarne F und F' je eine Kühlvorrichtung 4, 4' und werden im Anschluss an diese an der in Garnlaufrichtung A ersten Walze 5 der ersten Streckbrechungszone SB1 (Fig. 1) zusammen geführt.

Ein weiteres Produkt, das mit der beschriebenen Spinnmaschine hergestellt werden kann, ist Elastangam. Der Anteil solcher Garne wird immer grösser, weil sie bis zu 40% gedehnt werden können ohne dabei überdehnt zu werden, was die Herstellung völlig neuartiger Wirk- und Webstoffe ermöglicht. Die Herstellung von Elastangarn erfolgt bekanntlich aus einem so genannten Coregarn und einem Effektgarn, wobei das letztere beispielsweise in einer Luftblastexturierdüse durch kurzzeitige Überlieferung in das Coregarn eingebunden wird, so dass ein Elastangam mit den gewünschten elastischen Eigenschaften entsteht. Zur Herstellung von Elastangam auf der erfindungsgemässen Spinnmaschine wird der Luftdüse 9 zusätzlich zu dem das elastische Coregarn bildenden Faserband ein Mono- oder Multifilament-Effektgarn E (Fig. 1) zugeführt und in der Luftdüse 9 in das Coregarn eingebunden. Das verfestigte Stapelgam G ist dann ein Elastangarn.

## Patentansprüche

1. Einrichtung zur Herstellung von Stapelgam aus Filamentfäden (1), mit Mitteln zur Reisskonvertierung der Filamentfäden zu Stapelfasern, Mitteln für die Verfestigung der Stapelfasern zu einem Stapelgam (G) und Mitteln zum Aufspulen des Stapelgarns (G), **dadurch gekennzeichnet, dass** die Einrichtung als individuelle Maschinenposition (M) einer mehrerer Maschinenpositionen umfassenden Einheit ausgebildet ist, und dass jede Maschinenposition (M) individuell mit Filamentfäden (1) beschickbar ist und einen individuellen Antrieb aufweist.

2. Einrichtung nach Anspruch 1, **dadurch gekennzeichnet, dass** jede Maschinenposition (M) mindestens zwei Streckbrechungszonen (SB1, SB2, SB3) und eine optionale Streckzone (SZ) aufweist, welche durch antreibbare Walzen (5, 6, 7, 8; 2, 3) gebildet sind, und dass jede dieser Walzen einen individuellen, von einem Umrichter gespeisten Antriebsmotor aufweist.

3. Einrichtung nach Anspruch 2, **dadurch gekennzeichnet, dass** jeder Maschinenposition (M) eine Anzahl von maximal 20 Filamentfäden (1) zugeführt ist.

4. Einrichtung nach Anspruch 3, **dadurch gekennzeichnet, dass** eine Regelung der Spannung der jeder Maschinenposition (M) zugeführten Filamentfäden (1) erfolgt.

5. Einrichtung nach Anspruch 4, **dadurch gekennzeichnet, dass** eine Zusammenführung der zugeführten Filamentfäden (1) zu einem Filamentgarn (F) erfolgt, welches die mindestens zwei Streckbrechungszonen (SB1, SB2, SB3) und eine die Mittel zur Verfestigung des durch die Streckbrechung gebildeten Faserbandes bildende Luftdüse (9) durchläuft, und dass der Luftdüse (9) eine Streckwalze (10) für die Erzeugung der für die Verfestigung des Faserbandes zum Stapelgam (G) erforderlichen Verfestigungsspannung zugeordnet ist.

6. Einrichtung nach Anspruch 5, **dadurch gekennzeichnet, dass** das Filamentgarn (F) in Abhängigkeit von der gewünschten Orientierung der Fasern im Endprodukt die optionale Streckzone (SZ) durchlaufen kann.

7. Einrichtung nach Anspruch 6, **dadurch gekennzeichnet, dass** die die optionale Streckzone (SZ) bildenden Walzen (2, 3) durch beheizte Galetten gebildet sind, und dass zwischen der optionalen Streckzone (SZ) und der ersten Streckbrechungszone (SB1) eine Kühlzone mit einer Kühleinrichtung (4) vorgesehen ist.

8. Einrichtung nach Anspruch 6 oder 7, **dadurch gekennzeichnet, dass** die Walzen (2, 3) der Streckzone (SZ) und/oder die Streckwalze (10) durch vom Filamentgarn (F) beziehungsweise vom Stapelgam (G) mehrfach umschlungene, aus einer Förderwalze und einer Beilaufwalze bestehende Rollenpaare gebildet sind.

9. Einrichtung nach einem der Ansprüche 1 bis 8, **dadurch gekennzeichnet, dass** die Mittel zum Aufspulen des Stapelgams (G) durch eine Fadenverlegung gebildet sind, welche einen in Längsrichtung der Spule eine Changierbewegung ausführenden und von einem Changierelement antreibbaren Fadenführer aufweist.

10. Einrichtung nach einem der Ansprüche 1 bis 9, **dadurch gekennzeichnet, dass** jede Maschinenposition (M) ein Interface (17) für die Bedienung der Maschinenposition (M) aufweist.

11. Einrichtung nach Anspruch 10, **gekennzeichnet durch** ein allen Maschinenpositionen (M) zugeordnetes, gemeinsames Terminal (18) von welchem die Einstellparameter auf die einzelnen Maschinenpositionen (M) herunter ladbar sind.

12. Einrichtung nach Anspruch 5, **dadurch gekennzeichnet, dass** nach der Luftdüse (9) eine Fixierung des Stapelgarns (G) durch Erhitzen erfolgt.

13. Einrichtung nach einem der Ansprüche 7 bis 12, **dadurch gekennzeichnet, dass** die Streckwalze (10) durch eine beheizte Galette gebildet ist.

14. Einrichtung nach den Ansprüchen 7 und 13, **dadurch gekennzeichnet, dass** zwei voneinander beabstandete Streckwalzen (10, 12) und ein zwischen diesen angeordnetes Heizelement (11) vorgesehen sind.

15. Einrichtung nach Anspruch 6, **dadurch gekennzeichnet, dass** eine für die Herstellung eines aus zwei Filamentgamen (F, F') bestehenden Zweikomponentengarns vorgesehene Maschinenstation (M) je eine Streckzone (SZ, SZ') für jedes der beiden Filamengame (F, F') aufweist.

16. Einrichtung nach einem der Ansprüche 5 bis 15, **dadurch gekennzeichnet, dass** zur Herstellung von Elastangam der Luftdüse (9) zusätzlich zu dem das elastische Coregarn bildenden Faserband ein Mono- oder Multifilament-Eflektgam (E) zugeführt und in der Luftdüse (9) in das Coregarn eingebunden wird.

17. Einrichtung nach einem der Ansprüche 5 bis 16, **dadurch gekennzeichnet, dass** das Stapelgam (G) im Anschluss an die Streckwalze (12) eine Testvorrichtung (13) für die kontinuierliche Überprüfung der Qualität des Stapelgams (G) in Echtzeit durchläuft.

18. Einrichtung nach Anspruch 17, **dadurch gekennzeichnet, dass** in Garnlaufrichtung (A) nach der Testvorrichtung (13) eine Avivagevorrichtung (14) vorgesehen ist.

19. Einrichtung nach einem der Ansprüche 1 bis 18, **dadurch gekennzeichnet, dass** an jeder Maschinenstation (M) ein Autodoffer (16) für die Abnahme der hergestellten Spulen vorgesehen ist.
